# EUROPEAN PATENT SPECIFICATION

(11) **EP 4 465 430 B1**
(45) Date of publication and mention of the grant of the patent: **15.07.2026**
(21) Application number: 23898211.0
(22) Date of filing: 24.11.2023
(51) Int. Cl.: H01M 50/258, H01M 50/204, H01M 50/209, H01M 50/262, H01M 50/264

(54) **BATTERY BLOCK**
BATTERIEBLOCK
BLOC DE BATTERIE

(30) Priority: 29.11.2022 KR 20220163083
(43) Date of publication of application: 20.11.2024
(73) Proprietor: LG Energy Solution, Ltd., Seoul 07335 (KR)
(72) Inventor: YOON, Doo Han, Daejeon 34122 (KR)
(74) Representative: Plasseraud IP
(86) International application number: PCT/KR2023/019080
(87) International publication number: WO 2024/117680

(56) References cited:
- CN-A- 113 764 809
- CN-U- 213 026 399
- JP-A- 2020 047 573
- JP-B2- 5 897 471
- KR-A- 20220 001 228
- KR-A- 20220 001 228
- KR-A- 20220 149 425
- US-A1- 2021 320 368

## Description

### [Technical Field]

The present invention relates to a battery block that can simplify the structure of a battery pack to improve space utilization and reduce production costs and can be easily expanded to various specifications to match the capacity of the battery pack.

This application claims the benefit of priority based on Korean Patent Application No. 10-2022-0163083, filed on November 29, 2022.

### [Background Art]

Unlike primary batteries, secondary batteries can be recharged and have been researched and developed in recent years due to their potential for miniaturization and large capacity. The demand for the secondary battery as an energy source is increasing rapidly due to the technological development and increasing demand for mobile devices, electric vehicles, and energy storage systems, which are emerging in response to the need for environmental protection.

Secondary batteries are categorized into coin batteries, cylindrical batteries, prismatic batteries, and pouch batteries based on the shape of the battery case. In the secondary battery, the electrode assembly mounted inside the battery case is a charging and discharging power generation element consisting of a stacked structure of electrodes and separators.

Secondary batteries are a form of battery pack, where a plurality of battery cells can form one group. Battery packs increase energy density and can be used in devices that require high energy, such as in electric vehicles. Battery packs electrically connect a plurality of battery cells to produce a specified power output, cool the battery cells that increase in temperature during operation, and have various safety devices to respond to emergencies such as ignition, etc.

Increasing the energy density per unit volume is a major challenge for battery packs, which in turn comes down to how efficiently the space inside the battery pack can be utilized. This means more battery cells need to be able to mount into the same pack space, and making the structure of the battery pack as simple as possible is a valid way to do this.

In addition, it is advantageous to simplify the structure of the battery pack in order to reduce the production cost of the battery pack, and it is also necessary to design a structure that can be easily expanded to battery packs of various capacities.

An example of a battery module with connected end plates and side plates can be found in CN 213026399 U. An example of a battery module with a composite end plate can be found in CN 113764809 A.

### [Disclosure]

### [Technical Problem]

The present invention is directed to provide a battery block that can simplify the structure of a battery pack to improve space utilization and reduce production costs, and that can be easily expanded to various specifications to match the capacity of the battery pack.

However, the technical problem to be solved by the present invention is not limited to the above-described problem, and other problems not mentioned can be clearly understood by a person skilled in the art from the description of the invention described below.

### [Technical Solution]

The present invention relates to a battery block, characterized in one example by including a cell array comprising a plurality of prismatic cells arranged in a row; a pair of side plates disposed on two sides of the cell array, respectively; and a pair of end plates disposed on a front surface and rear surface of the cell array, respectively, wherein both ends of the end plates in a width direction are fixed against side brackets provided at both ends of the side plates in a length direction, and the interconnection of the end plates and the side plates constrains the cell array into one block, wherein the side plates comprise a single plate bent in an "∪" shape with an open top to form a space therein.

Further, the side plate comprises concave surfaces on both sides of the bent plate and may be provided at least one bonding rib formed by mutually bonding the concave surfaces facing each other along the length direction.

Also, the top of the side plate may have a bent upper flange that contacts a top surface of the cell array.

In one embodiment of the present invention, the side bracket may comprise a coupling groove into which a welding bolt protruding from the end plate is inserted, and the welding bolt and the coupling groove may be interconnected by welding.

The welding bolts and the coupling grooves may be provided in pairs up and down, with reference to the center in the height direction of the cell array.

According to one embodiment of the present invention, the side bracket may be provided with the coupling grooves on both the left and right sides with reference to the center in the width direction of the side plate.

Accordingly, another cell array arranged along the width direction may share the side plate, and a plurality of cell arrays may extend along the width direction by fixing welding bolts provided in a pair of end plates disposed at the front surface and rear surface of the another cell array, respectively, with respect to the coupling grooves of the side bracket.

Further, the end plate may include an end bracket that is fixed to the pack case.

In addition, the side bracket may comprise an end bracket fixed to the pack case.

Wherein, the end bracket may comprise a coupling surface parallel to the width direction, and the coupling surface may comprise one or more coupling holes formed therein.

Also, the end bracket may comprise a reinforcing rib perpendicular to the coupling surface.

### [Advantageous Effects]

The battery block of the present invention having the configuration as described above has a simple structure in which the end plates, which are joined through side brackets provided on the side plates, constrain the front, rear and sides of a cell array of a plurality of prismatic cells into a single block. Thus, by simplifying the structure of the battery block, the space utilization rate of the battery pack can be improved, and the production cost can be reduced.

Further, the battery block of the present invention is lightweight and exhibits excellent mechanical strength as the side plates are made of a single plate bent in an "∪" shape, and the side plates of such a battery block replace the configuration of cross beams in conventional battery packs. In such a way, a battery pack with the battery block of the present invention can further increase the energy density in the same volume due to the elimination of the cross beam structure.

Moreover, since the battery block of the present invention has a structure in which a plurality of battery blocks is connected such that neighboring cell arrays share a single side plate, the total number of side plates only needs to be one more than the number of cell arrays, further improving the space efficiency of a battery pack mounting the battery block of the present invention.

However, the technical effects that can be obtained through the present invention is not limited to the above-described effects, and other effects not mentioned can be clearly understood by a person skilled in the art from the description of the invention described below.

### [Brief Description of the Drawings]

Because the following drawings attached to the present specification illustrate exemplary embodiments of the present invention and serve to facilitate understanding of the technical idea of the present invention together with the detailed description of the invention described below, the present invention should not be limitedly interpreted on the basis of the drawings.
FIG. 1 is a drawing illustrating a battery block according to one embodiment of the present invention.
FIG. 2 is an exploded perspective view of the battery block of FIG. 1.
FIG. 3 is a drawing illustrating a side plate.
FIG. 4 is a cross-sectional view through an incision along line "A-A" of FIG. 3.
FIG. 5 is an enlarged view of the coupling structure between the side plate and the end plate.
FIG. 6 is a drawing illustrating a battery block according to another embodiment of the present invention.
FIG. 7 is a drawing illustrating a structure in which the battery block of FIG. 1 extends in the width direction.
FIGS. 8 and 9 illustrate an exemplary structure for securing the battery block of the present invention to a pack case.

### [Best Mode]

The present invention may have various modifications and various embodiments, and thus specific embodiments thereof will be described in detail below.

However, it should be understood that the present invention is not limited to the specific embodiments, and includes all modifications within the technical scope of the present invention.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present invention relates to a battery block, which, in one example, includes a cell array comprising a plurality of prismatic cells arranged in a row; a pair of side plates disposed on both sides of the cell array, respectively; and a pair of end plates disposed on the front and rear surfaces of the cell array, respectively.

The both ends of the end plates in a width direction are fixed against side brackets provided at both ends of the side plates in a length direction, and by such interconnection of the end plates and the side plates, the cell array is constrained as a block.

Further, the side plate may comprise a single plate bent in the form of an "∪" with an open top to form a space therein.

The battery block of the present invention with the configuration as described above has a simple structure in which the end plates, which are joined through side brackets provided on the side plates, constrain the front, rear and sides of a cell array of a plurality of prismatic cells into a single block. Thus, by simplifying the structure of the battery block, the space utilization rate of the battery pack can be improved, and the production cost can be reduced.

In addition, the battery block of the present invention is lightweight and exhibits excellent mechanical strength as the side plates are made of a single plate bent into an "∪" shape, and the side plates of the battery block replace the configuration of cross beams in conventional battery packs. As such, battery packs with the battery block of the present invention will be able to further increase the energy density in the same volume due to the elimination of the cross beam structure.

### [Mode for Invention]

Hereinafter, specific embodiments of a secondary battery of the present invention will be described in detail with reference to the accompanying drawings.For reference, the directions of front, back, up, down, left, and right used in the following description to designate relative positions are for the purpose of understanding the invention and refer to the directions shown in the drawings unless otherwise specified.

### [first embodiment]

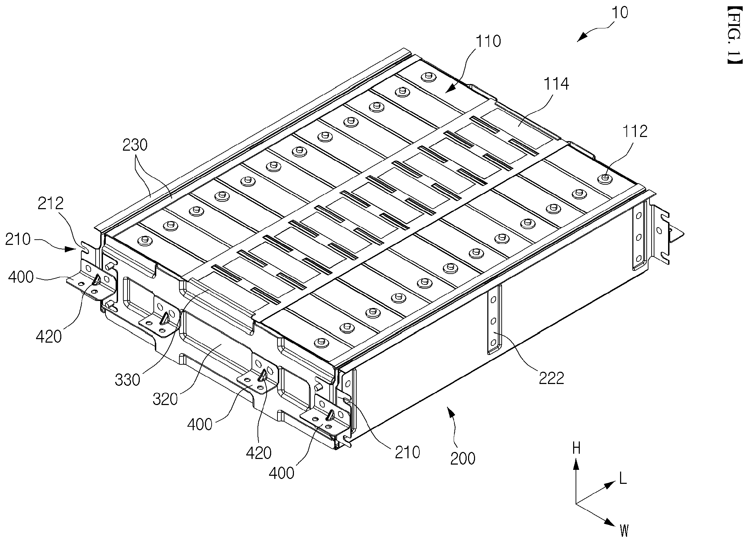

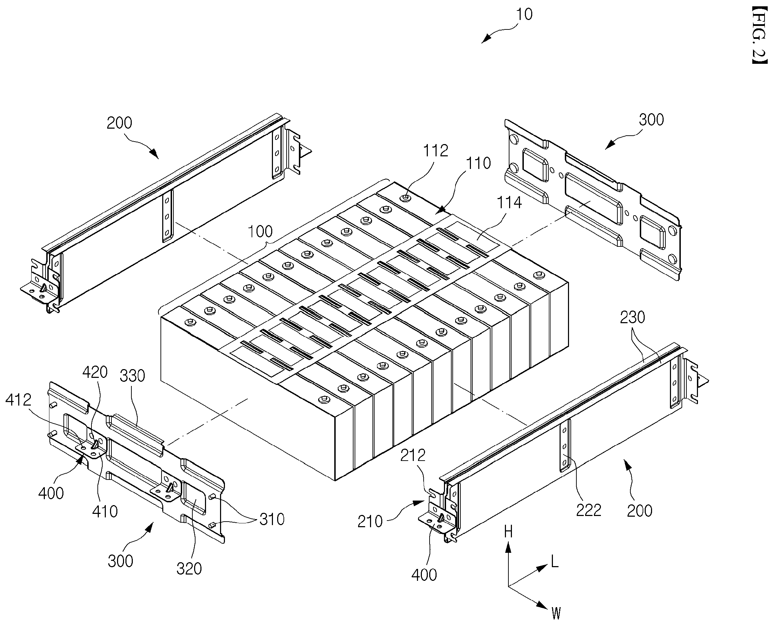

FIG. 1 is a drawing illustrating a battery block according to one embodiment of the present invention.FIG. 2 is an exploded perspective view of the battery block of FIG. 1.

Referring to the attached FIGS. 1 and 2, a battery block 10 of the present invention includes a pair of side plates 200 and a pair of end plates 300 that are joined thereto to form a parallelepiped-shaped space, and a cell array 100 accommodated in the parallelepiped space.

The cell array 100 refers to one group of cells comprising a plurality of prismatic cells 110 arranged in a row. Each prismatic cell 110 is a finished prismatic secondary battery capable of charging and discharging independently, and in the embodiment shown, 12 prismatic cells 110 are shown together to form a single cell array 100. All of the prismatic cells 110 are typically constructed to the same specifications, and the prismatic cells 110 aligned in a row have the overall shape of a parallelepiped.

For reference, the illustrated prismatic cell 110 corresponds to a unidirectional prismatic cell 110 having both positive and negative electrode terminals 112 disposed on the upper surface, and also having a venting device 114 between the pair of electrode terminals 112. The venting device 114 is a safety valve that ruptures to relieve the pressure inside the prismatic cell 110 when anexceed level of pressure is applied, and may comprise, for example, a notched rupture disk made of a thin plate-like member of a metal material. When the pressure inside the enclosed prismatic cell 110 rises, the pressure causes tensile deformation across the thin plate and tears the less strong notch portions, releasing the pressure inside the prismatic cell 110.

Further, the electrode terminals 112 of the prismatic cells 110 on the cell array 100 may be arranged to have the same polarity in a series of rows or alternating opposite polarities to facilitate electrical connections in parallel or series. In other words, alignment of the plurality of prismatic cells 110 in a row does not necessarily mean alignment of the polarity of the electrode terminals 112 in a row.

A pair of side plates 200 are disposed on two sides of the cell array 100, respectively, and a pair of end plates 300 are disposed on the front and rear surfaces of the cell array 100, respectively. Both ends of the end plates 300 in the width direction (W) are fixed against side brackets 210 provided at both ends of the side plates 200 in a length direction (L), and the interconnection of the end plates 300 and the side plates 200 constrains the cell array 100 as one block.

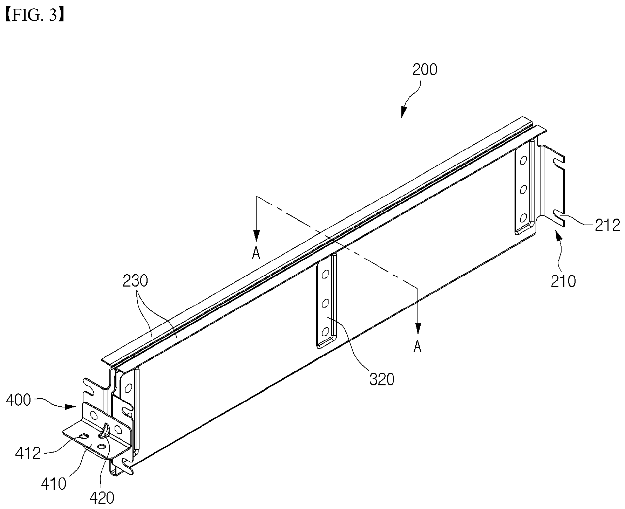

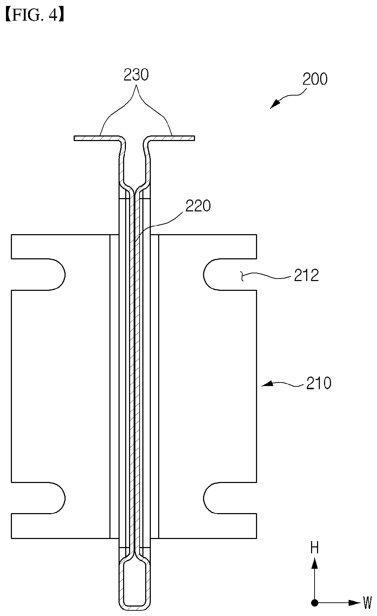

FIG. 3 is a drawing illustrating side plate 200, and FIG. 4 is a cross-sectional view through an incision along line "A-A" in FIG. 3. The illustrated side plate 200 comprises a single plate bent into an " U " shape with an open top to form a space within. By bending a single plate into an "∪" shape with an open top, the side plate 200 is lightweight and exhibits excellent mechanical strength.

In addition, as shown in FIGS. 3 and 4, the side plate 200 has concave surfaces 222 on both sides of the bent plate, and the facing concave surfaces 222 are interjoined to form bonding ribs 220. These bonding ribs 220 are provided at least one along the length direction L of the side plate 200, and in the embodiment shown, a total of three bonding ribs 220 are formed at both ends and in the center of the side plate 200.

A single plate bent in an "∪" shape may have excellent durability and strength against compression and tension in the length direction L due to the bending structure, but may be relatively weak against forces in the height direction (H). The bonding ribs 220 improve the stiffness of the side plate 200 against the height direction (H) force by connecting the concave surface 222 and the concave surface 222 on both sides of the side plate 200 by welding, riveting, or the like.

By such a structure of the side plate 200, namely, a single plate structure bent in the form of an "∪" and a structure of concave surface 222 interconnected with each other, the side plate 200 has a light weight and strong mechanical strength. Accordingly, in the battery block 10 of the present invention, the side plate 200 replaces the configuration of the cross beam conventionally provided in the battery pack, and the simplified structure of the battery pack enables the space utilization rate of the battery pack to be improved, further increasing the energy density in the same volume, and reducing the production cost.

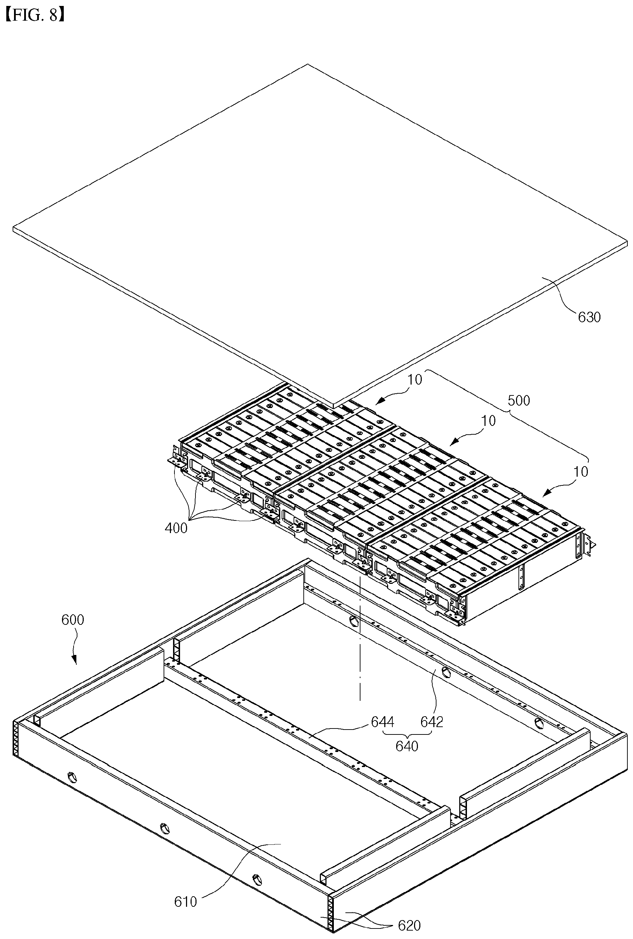

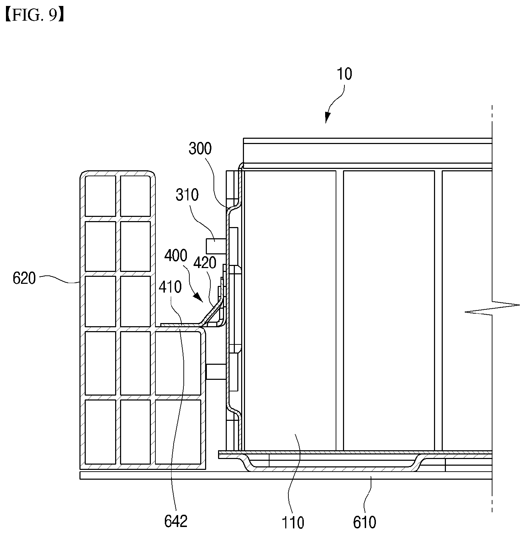

Further, the top of the side plate 200 is formed with a bent upper flange 230 that contacts the top surface of the cell array 100. The upper flange 230 creates a downward fixation force that presses the cell array 100 to the bottom when the battery block 10 is installed in the pack case 600. The structure by which the battery block 10 of the present invention is installed in the pack case 600 will be described in more detail later with reference to FIGS. 8 and 9.

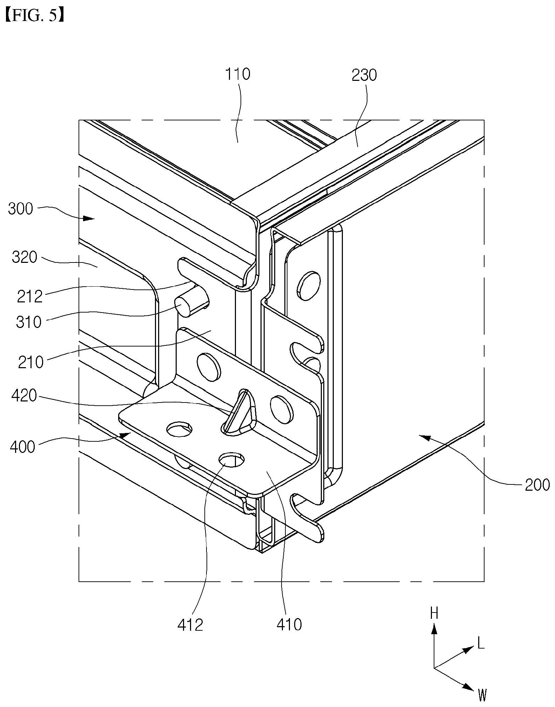

FIG. 5 is an enlarged view of the coupling structure between the side plate 200 and the end plate 300. A side bracket 210 provided on the side plate 200 has a coupling groove 212 into which a welding bolt 310 protruding from the end plate 300 is inserted, and the welding bolt 310 and the coupling groove 212 are joined to each other by welding.

Welding bolts 310 provided on a pair of end plates 300 disposed on the front and rear of the cell array 100, respectively, provide a coupling point for the side brackets 210, and coupling grooves 212 are engaged in the welding bolts 310 to assume the assembly position of the side plates 200 and end plates 300. For a stable and robust connection of the side plate 200 and the end plate 300, and for strong constraint to the cell array 100, the welding bolts 310 and the coupling grooves 212 may be provided in an up-down pair with respect to the center of the height direction H of the cell array 100.

Further, referring to FIGS. 1 to 3 and 5, the end plate 300 includes an end bracket 400 that is fixed to the pack case 600. Additionally, the side bracket 210 also includes end bracket 400 that is fixed to the pack case 600.

The end bracket 400 provided on the end plate 300 and the side plate 200 has a coupling surface 410 parallel to the width direction W, and one or more coupling holes 412 are formed on the coupling surface 410 of the end bracket 400. The coupling surface 410 of the end bracket 400 engages a mounting portion 640 provided in the pack case 600 (see FIG. 9), and the battery block 10 is fixed to the pack case 600 by joining or binding the end bracket 400 to the mounting portion 640 of the pack case 600 through the coupling holes 412.

Further, the end bracket 400 may include reinforcing ribs 420, such as in the form of a right triangle perpendicular to the coupling surface 410, to provide additional strength to height direction H loading. Additionally, one or more concave surfaces 320, similar to the concave surfaces 222 of the side plates 200, may be bent and formed to reinforce the rigidity of the end plate 300 itself, and the top of the end plate 300 may also be provided with an upper flange 330 for stable fixation of the cell array 100.

As such, the battery block 10 of the present invention has a simple structure in which the end plates 300, which are coupled through side brackets 210 provided on the side plates 200, constrain the front and rear and sides of the cell array 100 comprising a plurality of prismatic cells 110 as a single block. Thus, the simplified structure of the battery block 10 can improve the space utilization of the battery pack and reduce production costs.

In addition, the battery block 10 of the present invention is lightweight and exhibits good mechanical strength as the side plates 200 are made of a single plate bent in an " U " shape, and the side plates 200 of the battery block 10 replace the configuration of cross beams conventionally provided in battery packs.

### [second embodiment]

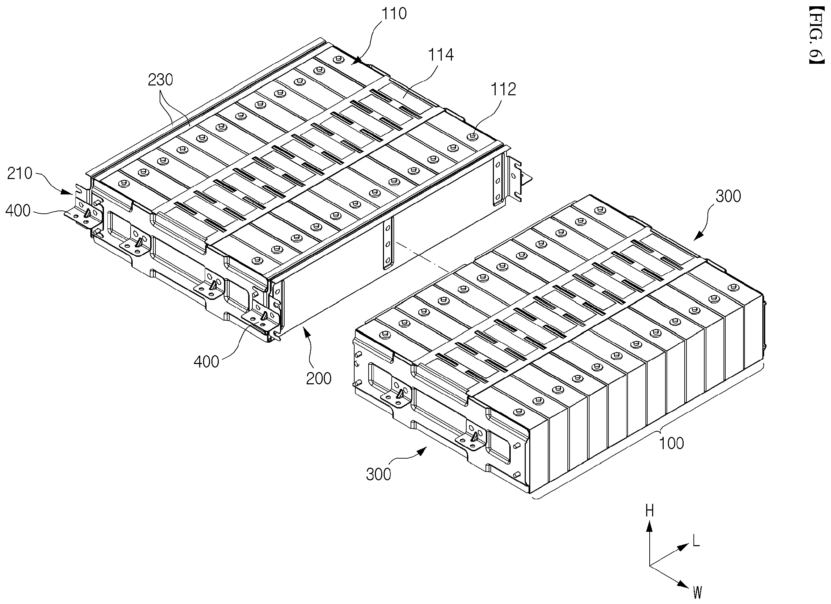

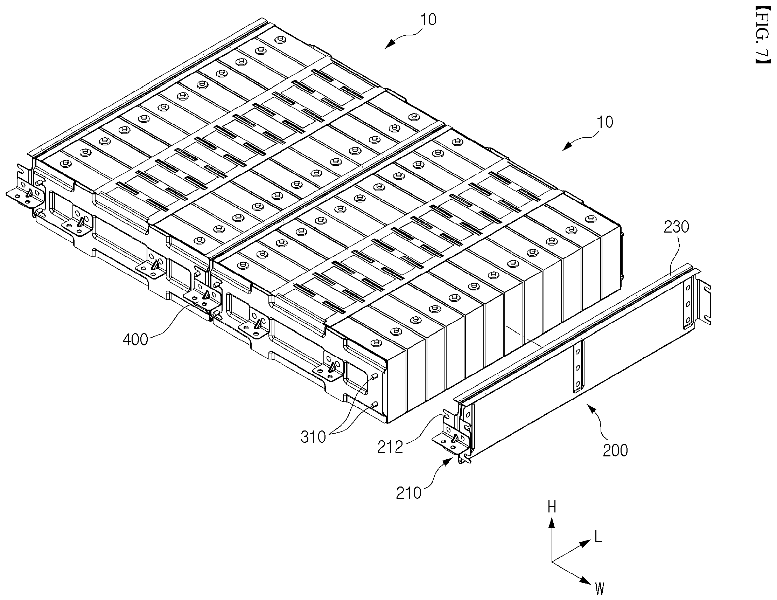

FIG. 6 is a drawing of a battery block 10 according to another embodiment of the present invention, and FIG. 7 is a drawing of a structure in which the battery block 10 of FIG. 4 extends in the width direction W.

The battery block 10 of the present invention is expandable by any number of cell arrays 100 along the width direction W through the side plates 200 and side brackets 210. A second embodiment of the present invention describes an embodiment of such expansion of the battery block 10.

Referring to FIG. 6, the side brackets 210 are provided with coupling grooves 212 on each of the left and right sides with respect to the center of the width direction W of the side plates 200. Thus, for one side plate 200, it is possible to connect one end plate 300 on each side of the width direction W thereof.

As shown in FIG. 7, another cell array 100 arranged along the width direction W shares a single side plate 200 in the center, and a plurality of cell arrays 100 may extend along the width direction W by means of welding bolts 310 provided in a pair of end plates 300 disposed at the front surface and rear surface of the other cell array 100, respectively, being fixed against coupling grooves 212 in the side brackets 210.

In this way, as the side brackets 210 are provided with coupling grooves 212 on both the left and right sides, respectively, one end plate 300 can be combined with each side of one side plate 200, and as adjacent cell arrays 100 share one side plate 200, the total number of side plates 200 in a structure in which a plurality of battery blocks 10 are connected requires only one more than the number of cell arrays 100. Thus, the space efficiency of a battery pack carrying the battery blocks 10 of the present invention is further improved.

Further, FIGS. 8 and 9 are exemplary drawings illustrating a structure for fixing a battery block 10 of the present invention to a pack case 600.

The pack case 600 in which the plurality of battery blocks 10 are installed includes a base plate 610 forming a bottom surface, side frames 620 forming walls along all sides of the base plate 610, and a top cover 630 enclosing the top surface of the pack case 600. The pack case 600 shown illustrates an example of two battery modules 500 with side plates 200 and end plates 300 joined together in a grid configuration to form a row of three cell arrays 100 (one assembly of a plurality of connected battery blocks according to a first embodiment will be referred to herein as a battery module).

One battery module 500, in which the three cell arrays 100 are aligned in a row, has end brackets 400 exposed along the end plates 300 at the front and rear, and one end bracket 400 also exposed on the side brackets 210 between the end plates 300.

Referring to the cross-sectional view of FIG. 9, the pack case 600 is provided with rail-shaped mounting portions 640 corresponding to the coupling surfaces 410 of the end brackets 400 that project to the front and rear of the battery module 500. The mounting portion 640 includes a pair of side mounting portions 642 coupled to or integrally formed with the side frame 620, and a center mounting portion 644 arranged across the center of the base plate 610.

When the battery modules 500 are inserted into the space between the side mounting portions 642 and the center mounting portions 644, the coupling surfaces 410 of the end brackets 400 face the mounting portions 640 of the pack case 600, and all of the battery blocks 10 are fixed to the pack case 600 by joining or binding the end brackets 400 to the mounting portions 640 of the pack case 600 through the coupling holes 412.

Here, when the end brackets 400 of each battery block 10 are engaged and fixed to the mounting portions 640 of the pack case 600, the side plates 200, and by extension, the upper flanges 230, 330, which are bent and formed on the top of the end plates 300, automatically generate a downward fixation force that presses the cell array 100 against the base plate 610, thereby ensuring that the cell array 100 is firmly pressed to the base plate 610.

The contact between the cell array 100 and the base plate 610 plays an important role in facilitating the transfer of heat generated by the cell array 100 to the base plate 610. Therefore, it would be advantageous for the upper flanges 230, 330 to generate sufficient downward fixation force if the tolerances are managed in such a way that there is a small amount of gap between the coupling surface 410 of the end bracket 400 and the mounting portion 640 when the battery block 10, or battery module 500, is placed in the pack case 600.

### [Description of Reference Numerals]

10: battery block
100: cell array
110: prismatic cell
112: electrode terminal
114: venting device
200: side plate
210: side bracket
212: coupling groove
220: bonding rib
222: concave surface
230: upper flange
300: end plate
310: welding bolt
320: concave surface
330: upper flange
400: end bracket
410: coupling surface
412: coupling hole
420: reinforcing rib
500: battery module
600: pack case
610: base plate
620: side frame
630: upper cover
640: mounting portion
642: side mounting portion
644: center mounting portion
W: width direction
L: length direction
H: height direction

## Claims

1. A battery block (10), comprising: a cell array (100) comprising a plurality of prismatic cells (110) arranged in a row;
a pair of side plates (200) disposed on two sides of the cell array (100), respectively; and
a pair of end plates (300) disposed on a front surface and rear surface of the cell array (100), respectively,
wherein both ends of the end plates (300) in a width direction (W) are fixed against side brackets (210) provided at both ends of the side plates (200) in a length direction (L), and the interconnection of the end plates (300) and the side plates (200) constrains the cell array (100) into one block,
**characterized in that** the side plates (200) comprise a single plate bent in an "U" shape with an open top to form a space therein,
wherein the side plate (200) comprises concave surfaces (222) on both sides of the bent plate and is provided with at least one bonding rib (220) formed by mutually bonding the concave surfaces (222) facing each other along the length direction (L).

2. The battery block (10) of claim 1, wherein a top of the side plate (200) has a bent upper flange (230) that contacts a top surface of the cell array (100).

3. The battery block (10) of claim 1, wherein the side bracket (210) comprises a coupling groove (212) into which a welding bolt (310) protruding from the end plate (300) is inserted, and the welding bolt (310) and the coupling groove (212) is interconnected by welding.

4. The battery block (10) of claim 3, wherein the welding bolts (310) and the coupling grooves (212) are provided in pairs up and down, with reference to the center in a height direction (H) of the cell array (100).

5. The battery block (10) of claim 3, wherein the side bracket (210) is provided with the coupling grooves (212) on both left and right sides with reference to the center in the width direction (W) of the side plate (200).

6. The battery block (10) of claim 5, wherein another cell array (100) arranged along the width direction (W) share the side plate (200), and a plurality of cell arrays (100) extend along the width direction (W) by fixing welding bolts (310) provided in a pair of end plates (300) disposed at the front surface and rear surface of the other cell array (100), respectively, with respect to the coupling grooves (212) of the side bracket (210).

7. The battery block (10) of claim 6, wherein the end plate (300) comprises an end bracket (400) that is fixed to the pack case (600).

8. The battery block (10) of claim 7, wherein the side bracket (210) comprises an end bracket (400) fixed to the pack case (600).

9. The battery block (10) of claim 7 or claim 8, wherein the end bracket (400) comprises a coupling surface (410) parallel to the width direction (W), and the coupling surface (410) comprises one or more coupling holes (412) formed therein.

10. The battery block (10) of claim 9, wherein the end bracket (400) comprises a reinforcing rib (420) perpendicular to the coupling surface (410).

## Patentansprüche

1. Batterieblock (10), umfassend: eine Zellenanordnung (100), die eine Vielzahl von prismatischen Zellen (110) umfasst, die in einer Reihe angeordnet sind; ein Paar Seitenplatten (200), die jeweils an zwei Seiten der Zellenanordnung (100) angeordnet sind; und ein Paar Endplatten (300), die jeweils an einer vorderen Oberfläche und einer hinteren Oberfläche der Zellenanordnung (100) angeordnet sind, wobei beide Enden der Endplatten (300) in einer Breitenrichtung (W) an Seitenhalterungen (210) befestigt sind, die an beiden Enden der Seitenplatten (200) in einer Längsrichtung (L) vorgesehen sind, und die Verbindung der Endplatten (300) und der Seitenplatten (200) die Zellenanordnung (100) zu einem Block begrenzt,
**dadurch gekennzeichnet, dass** die Seitenplatten (200) eine einzelne Platte umfassen, die in einer "U"-Form mit einer offenen Oberseite gebogen ist, um darin einen Raum zu bilden,
wobei die Seitenplatte (200) konkave Flächen (222) auf beiden Seiten der gebogenen Platte umfasst und mit mindestens einer Verbindungsrippe (220) versehen ist, die durch gegenseitiges Verbinden der einander zugewandten konkaven Flächen (222) entlang der Längsrichtung (L) gebildet wird.

2. Batterieblock (10) nach Anspruch 1, wobei eine Oberseite der Seitenplatte (200) einen gebogenen oberen Flansch (230) aufweist, der eine obere Oberfläche der Zellenanordnung (100) berührt.

3. Batterieblock (10) nach Anspruch 1, wobei die Seitenhalterung (210) eine Kopplungsnut (212) umfasst, in die ein von der Endplatte (300) vorstehender Schweißbolzen (310) eingesetzt ist, und der Schweißbolzen (310) und die Kopplungsnut (212) durch Schweißen miteinander verbunden sind.

4. Batterieblock (10) nach Anspruch 3, wobei die Schweißbolzen (310) und die Kopplungsnuten (212) paarweise oben und unten, bezogen auf die Mitte in einer Höhenrichtung (H) der Zellenanordnung (100), vorgesehen sind.

5. Batterieblock (10) nach Anspruch 3, wobei die Seitenhalterung (210) mit den Kopplungsnuten (212) auf der linken und rechten Seite, bezogen auf die Mitte in der Breitenrichtung (W) der Seitenplatte (200), versehen ist.

6. Batterieblock (10) nach Anspruch 5, wobei sich eine weitere Zellenanordnung (100), die entlang der Breitenrichtung (W) angeordnet ist, die Seitenplatte (200) teilt, und eine Vielzahl von Zellenanordnungen (100) sich entlang der Breitenrichtung (W) erstrecken, indem Schweißbolzen (310), die in einem Paar von Endplatten (300) vorgesehen sind, die an der vorderen Oberfläche und der hinteren Oberfläche der anderen Zellenanordnung (100) angeordnet sind, jeweils in Bezug auf die Kopplungsnuten (212) der Seitenhalterung (210) befestigt werden.

7. Batterieblock (10) nach Anspruch 6, wobei die Endplatte (300) eine Endhalterung (400) umfasst, die am Packgehäuse (600) befestigt ist.

8. Batterieblock (10) nach Anspruch 6, wobei die Seitenhalterung (210) eine Endhalterung (400) umfasst, die am Packgehäuse (600) befestigt ist.

9. Batterieblock (10) nach Anspruch 7 oder Anspruch 8, wobei die Endhalterung (400) eine Kopplungsfläche (410) parallel zur Breitenrichtung (W) umfasst, und die Kopplungsfläche (410) ein oder mehrere darin ausgebildete Kopplungslöcher (412) umfasst.

10. Batterieblock (10) nach Anspruch 9, wobei die Endhalterung (400) eine Verstärkungsrippe (420) senkrecht zur Kopplungsfläche (410) umfasst.

## Revendications

1. Bloc de batterie (10), comprenant : un réseau de cellules (100) comprenant une pluralité de cellules prismatiques (110) agencées en une rangée ; une paire de plaques latérales (200) disposées sur deux côtés du réseau de cellules (100), respectivement ; et une paire de plaques d'extrémité (300) disposées sur une surface avant et une surface arrière du réseau de cellules (100), respectivement, dans lequel les deux extrémités des plaques d'extrémité (300) dans un sens de la largeur (W) sont fixées contre des supports latéraux (210) prévus aux deux extrémités des plaques latérales (200) dans un sens de la longueur (L), et l'interconnexion des plaques d'extrémité (300) et des plaques latérales (200) contraint le réseau de cellules (100) en un seul bloc, **caractérisé en ce que** les plaques latérales (200) comprennent une plaque unique pliée en forme de « U » avec une partie supérieure ouverte pour former un espace à l'intérieur de celle-ci.

2. Bloc de batterie (10) selon la revendication 1, dans lequel la plaque latérale (200) comprend des surfaces concaves (222) des deux côtés de la plaque pliée et est pourvue d'au moins une nervure de liaison (220) formée par la liaison mutuelle des surfaces concaves (222) se faisant face le long du sens de la longueur (L).

3. Bloc de batterie (10) selon la revendication 1, dans lequel le support latéral (210) comprend une rainure d'accouplement (212) dans laquelle un boulon de soudage (310) faisant saillie de la plaque d'extrémité (300) est inséré, et le boulon de soudage (310) et la rainure d'accouplement (212) sont interconnectés par soudage.

4. Bloc de batterie (10) selon la revendication 3, dans lequel les boulons de soudage (310) et les rainures d'accouplement (212) sont prévus par paires de haut en bas, par rapport au centre dans un sens de la hauteur (H) du réseau de cellules (100).

5. Bloc de batterie (10) selon la revendication 3, dans lequel le support latéral (210) est pourvu des rainures d'accouplement (212) sur les côtés gauche et droit par rapport au centre dans le sens de la largeur (W) de la plaque latérale (200).

6. Bloc de batterie (10) selon la revendication 5, dans lequel un autre réseau de cellules (100) agencé le long du sens de la largeur (W) partage la plaque latérale (200), et une pluralité de réseaux de cellules (100) s'étendent le long du sens de la largeur (W) en fixant des boulons de soudage (310) prévus dans une paire de plaques d'extrémité (300) disposées sur la surface avant et la surface arrière de l'autre réseau de cellules (100), respectivement, par rapport aux rainures d'accouplement (212) du support latéral (210).

7. Bloc de batterie (10) selon la revendication 6, dans lequel la plaque d'extrémité (300) comprend un support d'extrémité (400) qui est fixé au boîtier de pack (600).

8. Bloc de batterie (10) selon la revendication 7, dans lequel le support latéral (210) comprend un support d'extrémité (400) fixé au boîtier de pack (600).

9. Bloc de batterie (10) selon la revendication 7 ou la revendication 8, dans lequel le support d'extrémité (400) comprend une surface d'accouplement (410) parallèle au sens de la largeur (W), et la surface d'accouplement (410) comprend un ou plusieurs trous d'accouplement (412) formés dans celle-ci.

10. Bloc de batterie (10) selon la revendication 9, dans lequel le support d'extrémité (400) comprend une nervure de renforcement (420) perpendiculaire à la surface d'accouplement (410).
